(19) Europäisches Patentamt
European Patent Office
Office européen des brevets

(11) Publication number: **0 391 853 A2**

(12) **EUROPEAN PATENT APPLICATION**

(21) Application number: 90810256.9

(22) Date of filing: 29.03.90

(51) Int. Cl.5: C08B 30/12, C08L 3/06

(30) Priority: 03.04.89 GB 8907459

(43) Date of publication of application: 10.10.90 Bulletin 90/41

(84) Designated Contracting States: BE DE FR GB IT NL

(71) Applicant: WARNER-LAMBERT COMPANY
201 Tabor Road
Morris Plains New Jersey 07950(US)

(72) Inventor: Sachetto, Jean-Pierre, Dr.
Düchelweiher 13
CH-4144 Arlesheim(CH)
Inventor: Egli, Markus, Dr.
Im Mythenweg 1
CH-5033 Buchs(CH)
Inventor: Stepto, Robert Frederick Thomas, Dr.
20, Gloucester Road
Poynton, Cheshire SK12 1JJ(GB)
Inventor: Zeller, Heinz
Steinbühlallee 55
CH-4054 Basel(CH)

(74) Representative: Silbiger, Jakob, Dr.
c/o CAPSUGEL AG Fabrikmattenweg 2-4
CH-4144 Arlesheim(CH)

# (54) Destructurized starch and method of making same.

(57) A thermoplastic melt made from starch containing bound phosphate groups and having a water content of 5 to 30% by weight calculated to the starch/water composition characterized in that within said melt the relative concentrations of the cations and the protons bound to said phosphate groups are within the limits

eq.$M^{2+}$ : $M^{+}$ : $H^{+}$ = (0.0-1.9) (0.0:0.9) : 0.0-1.4)

wherein

$M^{2+}$ is a divalent cation, preferably $Ca^{2+}$ or $Mg^{2+}$ or a mixture of these cations;
$M^{+}$ is a monovalent cation, preferably $Na^{+}$ or $K^{+}$ or a mixture of these cations;
$H^{+}$ is the proton and
the sum of the numbers of said equivalents eq.$M^{2+}$, $M^{+}$ and $H^{+}$ per mole of phosphate groups equals 2.

EP 0 391 853 A2

## Destructurized starch and method of making same

The present invention refers to destructurized starch containing a finite amount of electrolytes and to a process for making same.

It is known that natural starch which is found in vegetable products and which contains a defined amount of water, can be treated at an elevated temperature and in a closed vessel, thereby at an elevated pressure, to form a melt. The process is conveniently carried out in an injection molding machine or extruder. The starch is fed through the hopper onto a rotating, reciprocating screw. The feed material moves along the screw towards the tip. During this process, its temperature is increased by means of external heaters around the outside of the barrel and by the shearing action of the screw. Starting in the feed zone and continuing in the compression zone, the particulate feed becomes gradually molten. It is then conveyed through the metering zone, where it is further plasticized and where homogenization of the melt occurs, to the end of the screw. The molten material at the tip can then be further treated by injection molding or extrusion or any other known technique to treat thermoplastic melts to obtain shaped articles.

This treatment, which is described in the European Patent Application No. 84 300 940.8 (Publication No. 118 240) yields a destructurized starch. The reason for this being that the starch is heated above the melting and glass transition temperatures of its components so that they undergo endothermic transitions.

As a consequence a melting and disordering of the molecular structure of the starch granule takes place, so that a destructurized starch is obtained. The expression "destructurized starch" defines starch obtained by such thermoplastic melt formation.

Although such destructurized starch is useful in molding techniques and extrusion, it has been found, that the molded parts which are made from starch containing phosphate groups bound directly to the starch molecule, e.g. are made from potato starch, can show a random quality profile, a relatively high incidence of surface defects and the processed materials can have relatively low extensibilities.

Generally, the ease of processing varies from one starch to another and depends on the place of growth as well as on the time of year when the starch was harvested.

It has been found, that a starch which contains bound phosphate groups and which is treated according to the present invention shows excellent reproducible properties, independent of the place of growth and time of harvest of the starch.

In addition, it was found that starch containing phosphate groups, which is treated according to the present invention, yields materials which have considerably less visual defects in molded parts, relatively higher extensibilities and can be treated at constant, defined temperatures and pressures to obtain destructurization. The starch materials obtained according to the present invention also exhibit reproducible flow characteristics so that, due to the improved processability, defective parts are minimized as well as necessary, subsequent quality controls being reduced. According to the present invention, it is further possible to predict and control precisely the optimum temperatures for processing and of melt formation.

It is known, that many of the phosphate groups which are contained in certain native starches such as potato starch are associated with cations such as calcium, potassium or hydrogen ions, amongst others. The concentration of such phosphate groups, i.e. the number of phosphate groups present per anhydroglucose unit (AGU) of the starch molecules, varies considerably for different starches. For potato starches this concentration may be determined by standard procedures as about one phosphate group per 200 to 400 AGU.

The phosphate groups bound to the starch molecule are in fact phosphate ester groups of the formula

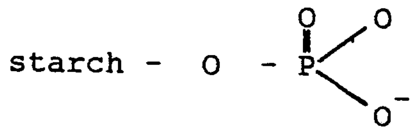 · ($M^{2+}$, $M^{+}$, $H^{+}$) (I)

wherein $M^{2+}$ specifies a divalent cation, mostly $Ca^{2+}$ or $Mg^{2+}$; $M^{+}$ specifies a monovalent cation mostly $Na^{+}$ or $K^{+}$; and $H^{+}$ means the proton.

In formula (I) one mole of phosphate groups has two equivalents. One mole of $M^{2+}$ has two equivalents; one mole of $M^{+}$ and $H^{+}$ have one equivalent each. In the present context, one equivalent corresponds to one mole of possible ionic charge.

As can be seen from the formula (I) above, there are always two equivalents of cations and/or protons per one mole of ionized phosphate groups. However, the number of equivalents of each of the species $M^{2+}$,

$M^+$ or $H^+$ per mole of phosphate groups can vary between zero and two. Thus, a divalent ion, $M^{2+}$, may be associated with one or two phosphate groups.

It has now been found that the properties of the melt formed in the thermoplastic processing of starch are critical for the properties of the final shaped article made from this melt.

It has further been surprisingly found, that a melt formed from starch containing bound phosphate groups, especially from potato starch, has optimum properties, expressed as numbers of equivalents per mole of phosphate groups if the relative concentration of the cations and the protons as mentioned above, are within the following limits:

$eq.M^{2+} : M^{1+} : H^{+1}$ = (0.0-1.9) : (0.0:0.9) : (0.0-1.4) wherein

$M^{2+}$ is preferably $Ca^{2+}$ or $Mg^{2+}$ or a mixture of these cations

$M^+$ is preferably $Na^+$ or $K^+$ or a mixture of these cations,

$H^+$ is the proton and

the sum of the number of the equivalents $M^{2+}$, $M^+$ and $H^+$ per mole of phosphate groups equals 2.

Preferred values are

$eq.M^{2+} : M^+ : H^+$ = (0.8 - 1.2) : (0.2 - 0.6) : (0.4 -0.8), and especially wherein

$eq.M^{2+} : M^+ : H^+$ = (0.85 - 1.15) : (0.3 - 0.5) : (0.5 -0.7)

and most preferred is

$eq.M^{2+} : M^+ : H^+$ = 1 : 0.4 : 0.6

wherein each time the sum of the numbers of said equivalents $eq.M^{2+}$, $M^+$ and $H^+$ per mole of phosphate groups equals 2.

It was further found that the processing behaviour of starches containing bound phosphate groups, preferably potato starches, is related linearly to the concentrations of the counter cations of the phosphate groups, i.e. related linearly to the number of equivalents of $M^{2+}$, $M^+$ and $H^+$ per mole of phosphate groups. It was found, that the linear relationship can be expressed by the following formula:

$$TMFI = a_o + a_1 [eq.M^{2+}] + a_2 [H^+] \qquad (II)$$

wherein

TMFI = Thermoplastic Melt Formation Index

$a_o$ = 278.34

$a_1$ = - 45.24

$a_2$ = - 77.60

and

TMFI = $a_o + a_1(1.935 - 0.005) + a_2 (0.01 - 1.26)$, where the limits as given above are the preferred ones.

Preferred limits for the Thermoplastic Melt Formation Index as defined herein are therefore from 171 to 202, preferably from 180 to 190, and is most preferred about 185.

The present invention therefore relates specifically to thermoplastic melts made from starch containing bound phosphate groups and having a water content of 5 to 30% by weight calculated to the total starch/water composition, characterized in that within said melt the concentrations of the cations and the protons bound to said phosphate groups, expressed as number of equivalents per mole of phosphate, are within the limits

$eq.M^{2+} : M^{1+} : H^{1+}$ = (0.0-1.9) (0.0:0.9) : (0.0-1.4)

wherein

$M^{2+}$ is a divalent cation, preferably $Ca^{2+}$ or $Mg^{2+}$ or a mixture of these cations;

$M^+$ is a monovalent cation, preferably $Na^+$ or $K^+$ or a mixture of these cations;

$H^+$ is the proton and

the sum of the numbers of said equivalents, $eq.M^{2+}$, $M^+$ and $H^+$ per mole of phosphate groups, equals 2.

The present invention further refers to a thermoplastic melt made from starch containing bound phosphate groups and having a water content of 5 to 30% by weight calculated to the total starch/water composition, characterized in that said melt has a Thermoplastic Melt Formation Index within the range of 171 to 202 and preferably within the range of from 180 to 190.

The invention further refers to such a thermoplastic melt wherein the ratio of $eq.M^{2+}:M^+:H^+$ is (0.8 - 1.2) : 0.2 - 0.6) : (0.4 - 0.8) as well as to the further preferred values given hereinbelow and sum of the number of equivalents $M^{2+}$, $M^+$ and $H^+$ per mole of phosphate groups equals 2.

The invention further refers to the starch containing bound phosphate groups which has been treated according to this invention, preferably treated potato starch, characterized in that said starch has a Thermoplastic Melt Formation Index of from 171 to 202 and preferably of from 180 to 190, resp. wherein the ratio of $eq.M^{2+}:M^+:H^+$ is 1:(0.2 - 0.6) : (0.4 - 0.8) and the sum of the numbers of said equivalents $eq.M^{2+}$, $M^+$ and $H^+$ per mole of phosphate groups equals 2.

The invention further refers to methods of preparing the starches of the present invention.

The present invention further refers to the use of such melted or destructurized starches in thermoplastics processing techniques such as compression molding, injection molding, blow molding or extrusion.

Optionally, and as often practised for thermoplastics, such destructurized starch is extruded first and cut into granules before using it in the aforesaid processing techniques.

The process for obtaining the starch having the cation and proton composition, that is, having a TMFI as given above comprises the steps of

A) providing a starch material containing bound phosphate groups

B) dispersing said starch in an aqueous solution containing divalent cations $M^{2+}$, monovalent cations $M^{+}$ in the ratio of eq.$M^{2+}$:$M^{+}$ = 1:(2-15), preferably 1:(2-10), and a pH of 4-7.5 for a time sufficient to bring the aqueous solution and the dispersed starch to ionic equilibrium

C) separating the starch from the aqueous medium and

D) conditioning the obtained starch material to a water content of 5-30% by weight, calculated on the basis of total weight of starch and water.

The process for obtaining the starch melt, comprises the further step E:

E) heating the starch/water composition as obtained under step D) optionally after having added further additive at an elevated pressure to a temperature sufficient and for a time long enough to essentially destructurize the starch while maintaining said water content until a melt of destructurized starch is formed. Step E) is preferably carried out whilst using one of the aforesaid thermoplastics processing techniques.

The present invention also refers to the melt of destructurized starch obtained by said process and, in addition, to the concomitant thermoplastics processing thereof.

The present invention further refers to the process of

F) cooling said melt (as obtained under E)) optionally after carrying out step E) whilst forming the melt into a particular shape article, to give solid, shaped material or a solid, shaped article.

The present invention further refers to the solid material or article obtained by said cooling step F).

Those skilled in the art will understand that there are also other ways to that shown in the steps A) to C) to change the cation content of starches which contain phosphate groups to a desired value. Thus, it is possible to treat the starch initially with aqueous dilute acid, e.g. 0.1 N HCl to eliminate the cations $M^{2+}$ and $M^{+}$ present partially or wholly, that is, to reduce their concentration to any desired value and subsequently to add the necessary amounts of $M^{2+}$ and/or $M^{+}$ separately or together. Such processes are equivalent to the steps A) to C) described above.

It is further understood, that the concentrations of eq.$M^{2+}$ and $M^{+}$ added are not necessarily the same as the concentrations finally with on the starch molecules due to the fact that the affinities of the individual cationic species for the phosphate group will generally be different, one from the other. For example, as is known, $Ca^{2+}$ forms a salt of low solubility with the phosphate group whilst $Na^{+}$ or $K^{+}$ do not. It means that the affinity of $Ca^{2+}$ for the phosphate group is much higher than that of $Na^{+}$ and $K^{+}$. Calculated on an equivalent basis the affinity of $Ca^{2+}$ for the phosphate group is about 10 to 15 times higher than the affinity for $Na^{+}$ to the phosphate group. Therefore, a correspondingly lower relative concentration of $M^{2+}$ compared with the concentration of $M^{+}$ is added to obtain a targeted ratio of $M^{2+}$ : $M^{+}$ : $H^{+}$ on the starch. It is within the general knowledge of the person skilled in the art to experimentally determine the exact concentration of each cation in the aqueous solution used for dispersing the starch as defined in step B) above.

The starch obtained by the treatment of the present invention will essentially contain only bound phosphate salts but no free electrolytes i.e. salts not bound to the starch molecule.

The term "starch" as used herein includes chemically, essentially non-modified starches as for example generally carbohydrates of natural, vegetable origin, composed mainly of amylose and/or amylopectin and which contain bound phosphate groups. Preferred is potato starch. It further includes such physically modified starch such as gelatinized or cooked starch, starch with a modified acid value ($pH = -\log_{10} [H^{+}]$), e.g. where the acid value has been adjusted to within a range of about 3 to 6.

In step B) previously the starch is dispersed in an aqueous solution containing the ions $M^{2+}$, $M^{+}$ and $H^{+}$ in the range of indicated ratios. This step is conveniently carried out as follows:

A commercial starch having a water content of 20% $H_2O$, is suspended in 2.5 times its weight of an aqueous solution containing $CaCl_2$ and NaCl in concentrations of 0.001 - 0.1 mole/l and in a ratio of eq$M^{2+}$:$M^{+}$ = 1:(2-15) at a given pH. The suspension is stirred for 15-60 minutes, preferably 30-45 minutes, and the starch is filtered off and washed with deionized water. The starch material obtained is conditioned, preferably to a water content of 5-35% with pre-dried air at 20-30 °C.

The starch obtained under step C) previously is conditioned, preferably to a water content in the range of about 10 to 25% and better 10 to 20% calculated to the total weight of starch and water. Preferred, is a final water content of the destructurized starch/water material of 12 to 19% and especially 14 to 18% calculated to the total weight of starch and water.

The conditioned starch material with the appropriate water content is then optionally mixed with further additives as described herein further below and heated under elevated pressure to above the glass transition temperatures and above the melting points of its components. This temperature is within the range of about 105-190 °C, preferably within the range of about 130 to 190 °C, and especially about 150-170 °C. The minimum pressures correspond to the water vapour-pressure at these temperatures in closed volumes.

The starch material is heated preferably in a closed volume for a time long enough to effect destructurization. A closed volume can be a closed vessel or the volume created by the sealing action of the unmolten material as happens in molding or extrusion equipment. In this sense, for example, the screw and the barrel of an injection molding machine or an extruder is to be understood as being a closed vessel. Pressures created naturally in the closed vessel on heating correspond to the vapour pressure of water at the temperatures attained but of course pressure may be applied and this is normally done during molding. For injection molding and extrusion, the preferred applied pressures to be used are in the range of pressures normally applied in such processes and known per se, i.e. from zero to 150 x $10^5$ $N/m^2$ preferably from zero to 100 x $10^5$ $N/m^2$ and most particularly from zero to 75 x $10^5$ $N/m^2$. If extrusion is used, the destructurized starch obtained may be granulated and then optionally mixed with further additives before it is processed into a shaped article or shaped, solid material.

The final melt of the destructurized starch may be obtained according to this invention during injection molding, e.g. injected under the normal range of injection pressures used in injection molding, namely, for thinner walled articles in the range from 300 x $10^5$ $N/m^2$ to 3.000 x $10^5$ $N/m^2$ preferably 700 x $10^5$ to 2200 x $10^5$ $N/m^2$.

The starch material of the present invention may contain or may be mixed with additives such as extenders e.g. water soluble or water swellable polymeric materials, with essentially water insoluble thermoplastic polymers, with inorganic fillers, lubricants, plasticizers and/or coloring agents.

These additives may be added before heating the starch to form the melt (step E) or after this step. It mainly depends on the intended use of the destructurized starch.

Such additives are extenders e.g. essentially hydrophilic polymeric materials which are water-soluble or water-swellable of different kinds, e.g. gelatin, vegetable proteins such as sunflower protein, soybean proteins, cotton seed proteins, peanut proteins, rape seed proteins, blood proteins, egg proteins, acrylated proteins; water-soluble polysaccharides such as: alginates, carrageenans, guar gum, agar-agar, gum arabic and related gums (gum ghatti, gum karaya, gum tragacanth) pectin; water-soluble derivatives of cellulose: alkylcelluloses hydroxyalkylcelluloses and hydroxyalkylalkylcelluloses, such as: methylcellulose, hydroxymethylcellulose, hydroxyethylcellulose, hydroxypropylcellulose, hydroxyethylmethylcellulose, hydroxpropylmethylcellulose, hydroxybutylmethylcellulose, cellulose esters and hydroxyalkylcellulose esters such as: celluloseacetylphtalate (CAP), Hydroxypropylmethylcellulose (HPMCP); carboxyalkylcelluloses, carboxyalkylalkylcelluloses, carboxyalkylcellulose esters such as: carboxymethylcellulose and their alkalimetal salts; water-soluble or water-swellable synthetic polymers such as: polyacrylic acids and polyacrylic acid esters, polymethacrylic acids and polymethacrylic acid esters, polyvinylacetates, polyvinylalcohols, polyvinylacetatephthalates (PVAP), polyvinylpyrrolidones, polycrotonic acids; suitable are also phtalated gelatin, gelatin succinate, crosslinked gelatin, shellac, water soluble or water-swellable chemical derivatives of starch, cationically modified starch, cationically modified acrylates and methacrylates possessing, for example, a tertiary or quaternary amino group, such as the diethylaminoethyl group, which may be quaternized if desired; and other similar polymers.

Such extenders may optionally be added in any desired amount preferably within the range of up to 50 %, preferably within the range of 0.5 % to 30 % (and most preferred in the range of 5-20%) by weight based on the weight of all components.

Examples of essentially water-insoluble thermoplastic materials are polyolefines, such as polyethylene (PE), polyisobutylenes, polypropylenes, vinylpolymers such as poly(vinyl chloride) (PVC), poly(vinyl acetates), polystyrenes; polyacrylonitriles (PAN); polyvinylcarbazols (PVK); essentially water-insoluble poly(acrylic acid) esters or poly(methacrylic acid) esters; polyacetals (POM); polycondensates such as polyamides (PA), thermoplastic polyesters, polycarbonates, poly(alkylene terephthalates); polyarylethers; thermoplastic polyimides; but also poly(hydroxy butyrate) (PHB) and high molar-mass, essentially water-insoluble poly(alkylene oxides) such as polymers of ethylene oxide and propylene oxide as well as their copolymers are included.

Further included are essentially water-insoluble thermoplastic copolymers of the different kinds known such as ethylene/vinyl acetate-copolymers (EVA); ethylene/vinyl alcohol-copolymers (EVAL); ethylene/acrylic acid-copolymers (EAA); ethylene/ethyl acrylate-copolymers (EEA); ethylene/methyl acrylate-copolymers (EMA); ABS - copolymers; styrene/acrylonitrile-copolymers (SAN); as well as their

mixtures.

Preferred from these are those with a nominal processing temperature within the range of 95° C to 210° C, preferably within the range of 95° C to 190° C.

Preferred from these are further those polymers containing polar groups such as ether-, acid or ester groups. Such polymers include e.g. copolymers of ethylene, propylene or isobutylene such as ethylene/vinyl acetate-copolymers (EVA), ethylene/vinyl alcohol-copolymers, ethylene/acrylic acid-copolymers (EAA),ethylene/ ethyl acrylate-copolymers (EEA), ethylene/methacrylate- copolymers (EMA), styrene/acrylonitrile-copolymers (SAN); polyacetals (POM) and their mixtures as mentioned above.

The ratio of the water containing destructurized starch to synthetic polymer can be 0.1:99.9 to 99.9:0.1. It is however preferred that the destructurized starch contributes noticeably to the properties of the final material. Therefore, it is preferred that the destructurized starch is present in an amount of at least 50% and more preferably in the range of 70% to 99.5% by weight of the entire composition, i.e. the synthetic polymer is present in a concentration of less than 50 % and more preferably in a concentration in the range of 30 % to 0.5 % by weight of the entire composition.

A mixture of 0.5 to 15% by weight of the synthetic polymer and 99.5 to 85% of the water containing destructurized starch shows already a significant improvement in the properties of the obtained materials. For certain applications a ratio of the synthetic polymer to the starch/water component of 0.5 - 5% to 99.5 - 95% is preferred and especially a ratio of 0.5 -2% to 99.5 - 98% by weight.

The added thermoplastic polymer may contain the usual known additives for processing.

The starch is preferably destructurized and granulated before it is mixed with the synthetic polymer which is preferably granulated to an equal granular size as the destructurized starch. However, it is possible to process native starch or pre-extruded granulated or powdered starch together with powdered or granulated thermoplastic polymer in any desired mixture or sequence.

The water content herein refers to the weight of starch/water component within the total composition but is excluding the weight of the added thermoplastic polymer. It is essential that the starch/water component has the indicated water content during melt formation.

By an "essentially water-insoluble thermoplastic polymer" a polymer is understood that which preferably absorbs water to a maximum of 5% per 100 grams of the polymer at room temperature and preferably to a maximum of about 2% per 100 grams of the polymer at room temperature. Other polymers are considered as being water-swellable or water-soluble.

Further additives are inorganic fillers, such as the oxides of magnesium, aluminum, silicon, titanium, etc. preferably in a concentration in the range of about 0.02 to 3 % by weight preferably 0.02 to 1 % based on the total weight of all the components.

Further examples of additives are plasticizers which include low molecular poly(alkylene oxides), such as poly(ethylene glycols), poly(propylene glycols), poly(ethylene-propylene glycols); organic plasticizers of low molar masses, such as glycerol, pentaerythritol, glycerol monoacetate, diacetate or triacetate; propylene glycol, sorbitol, sodium diethylsulfosuccinate, triethyl citrate, tributyl citrate, phthalates such as dioctylphthalate, triethanol amine + triols such as 1, 2, 4 butanetriol; 1, 2, 5 pentanetriol; 1, 2, 6 hexanetriol, quaternary ammonium salts such as choline chloride; choline bromide; tetramethyl or tetraethyl or tetrabutyl ammonium chloride; N-hydroxyalkyl amides such as N-hydroxyethyl lactamide, N-hydroxyethyl formamide, N-hydroxyethyl - N - methyl butyramide etc., N-cyanoethyl - N- hydroxylamines such as N- cyanoethyl -N, N - di (2 hydroxyethyl) amine. Trimethylol propane; diols such as 1, 6 hexanediol; 1, 4-butanediol, 2,3-butanediol; ethanol amine acetate, ethanol amine chloride. High molecular weight plasticizers such as polyvinyl alcohol (PVA), amylose, xanthan gums added in concentrations ranging from 0.5 to 20 %, preferably ranging from 0.5 to 10 % based on the total weight of all the components.

Colouring agents may also be added, examples of such colouring agents include known azo dyes, organic or inorganic pigments, or colouring agents of natural origin. Inorganic pigments are preferred, such as the oxides of iron or titanium; these oxides, known per se, being added in concentrations ranging from 0.001 to 10 %, preferably 0.5 to 3 %, based on the total weight of all the components.

The sum of the plasticizer and water contents should preferably not exceed 25 %, and should most preferably not exceed 20 %, based on the total weight of all the components excluding any optional added thermoplastic polymer.

There may further be added compounds to improve the flow properties of the starch material such as animal or vegetable fats, preferably in their hydrogenated form, especially those which are solid at room temperature. These fats have preferably melting points of 50° C or higher. Preferred are triglycerides of $C_{12}$ -, $C_{14}$ -, $C_{16}$ -, and $C_{18}$ - fatty acids.

The fats can be added alone without adding extenders or plasticizers.

The fats can advantageously be added alone or together with mono- and/or diglycerides or

phosphatides, especially lecithin. The mono- and diglycerides are preferably derived from the types of fats described above, i.e. from $C_{12}$ -, $C_{14}$ -, $C_{16}$ -, and $C_{18}$ - fatty acids.

The total amounts used of the fats, mono-, diglycerides and/or lecithins are up to 5 % and preferably within the range of about 0.5 to 2 % by weight of the destructurized starch components.

The materials described herein above form thermoplastic melts on heating and in closed vessels, i.e. under conditions of controlled water-content and pressure. Such melts can be processed using thermoplastics processing techniques, such as, for example, injection molding, blow molding, extrusion and coextrusion (rod, pipe and film extrusion), compression molding, to produce known articles. The articles include bottles, sheets, films, packaging materials, pipes, rods, laminated films, sacks, bags, pharmaceutical capsules, granules or powders.

The starch materials produced may be used as carrier materials for active substances, and may be mixed with active ingredients such as pharmaceuticals and/or agriculturally active compounds such as insecticides or pesticides for subsequent release applications of these components and with plast seeds. The resulting materials can be granulated or worked to fine powders or used as shaped, processed materials.

The following examples further explain the invention.

Example 1

2 kg of a native potato starch at 20% water content was analyzed in a conventional manner to give the following results for the cations fixed in the phosphate groups:
eq.$M^{2+}$:$M^{+}$:$H^{+}$ = 0.5 : 0.7 : 0.8
Number of anhydrous glucose units per phosphate group = 206.

The sample was then added to 5 litres of water containing 28 g $CaCl_2$ and 73 NaCl corresponding to a ratio of eq.$Ca^{2+}$:$Na^{+}$ = 1 : 2.5. The slurry was stirred for 30 minutes. The starch was then filtered off and thoroughly washed with deionized water. The ion content of the starch was then analytically determined. The result was: eq.$Ca^{2+}$:$Na^{+}$:$H^{+}$ = 0.9 : 0.4 : 0.7.

Example 2

2 kg of a native potato starch containing 17% water content was analyzed in a conventional manner to give the following results:
eq.$M^{2+}$:$M^{+}$:$H^{+}$ = 0.5 : 1 : 0.5
Number of anhydrous glucose units per phosphate groups: 215.

The sample was then added to 5 litres of a solution at pH 5.7 containing 12 g $CaCl_2$ and 88 g NaCl corresponding to a ratio of eq.$Ca^{2+}$:$Na^{+}$ = 1 : 7. The slurry was stirred for 15 minutes. The starch was then filtered off and thoroughly washed with deionized water. The ion content of the starch was then analytically determined. The result was: eq.$Ca^{2+}$:$Na^{+}$:$H^{+}$ = 0.75 : 0.5 : 0.75.

Example 3

In an analogous manner as described in the Examples 1 and 2 the following samples of potato starch were treated the following way (Table 1):

Table 1

| **No.** | **before treatment** | | **treatment** |
|---|---|---|---|
| | eq.$M^{2+}$ : $M^+$ : $H^+$ | AGU/$PO_4^{2-}$ | $M^+Cl$ : $M^{2+}Cl_2$ |
| 1 | 0.5 : 0.7 : 0.7 | 210 | 2.5 NaCl : 1 $CaCl_2$ |
| 2 | 0.8 : 0.7 : 0.5 | 246 | 2.5 KCl : 1 $CaCl_2$ |
| | | | pH 5.8 |
| **No.** | **after treatment** | | |
| | eq.$M^{2+}$ : $M^+$ : $H^+$ | | AGU/$PO_4^{2-}$ |
| 1 | 0.9 eq.$Ca^{2+}$ : 0.3 $Na^+$ : 0.8 $H^+$ | | 210 |
| 2 | 1.1 eq.$Ca^{2+}$ + 0.2 $K^+$ : 0.7 $H^+$ | | 246 |

## Example 4

Treated native potato starch as obtained in Example 1, a lubricant release agent (hydrogenated triglyceride), a melt flow accelerator (lecithin), and a texturizing agent ($TiO_2$) were mixed together in the relative proportions in a high speed powder mixer for 10 minutes so that a composition of 83 parts of $H_2O$-washed potato starch, 0.8 parts of the hydrogenated triglyceride containing the fatty acids $C_{18}$:$C_{16}$:$C_{14}$ in a ratio of 65:31:4 weight percent, 0.4 parts of lecithin, 0.4 parts of titanium dioxide and 17 parts of water in the form of a freely flowing powder was obtained. This powder was fed into the hopper and hence into the screw and barrel of an injection-molding machine having the temperature profile and injection-molding pressure indicated in Table 2 for this trial. It was then injected into a mold for pharmaceutical containers. The important injection molding parameters were recorded and the visual quality of the molded parts (% defect level) was checked and values are given also in Table 2. The general processing were for all samples the same as follows:

The temperature and residence time were constant for all samples and the injection pressure was optimized for each sample. As can be seen from Table 2, the defect levels show significant differences depending on the ratio of eq.$M^{2+}$:$M^+$:$H^+$, resp. untreated natural starch and the starch treated according to this invention.

Table 2

| Sample corr. to: | Temp. Prof. (°C) of the barrel | | | | Resid. Time | Inject. Pressure | Cycle Time | Defect Level |
|---|---|---|---|---|---|---|---|---|
| | $T_b$ | $T_m$ | $T_e$ | $T_n$ | (s) | (bar) | (s) | (%) |
| No. 1, | | | | | | | | |
| untreated | 90 | 150 | 155 | 155 | 510 | 1990 | 7.4 | 15 |
| treated | " | " | " | " | " | 1430 | " | 0 |
| No. 2, | | | | | | | | |
| untreated | " | " | " | " | " | 1950 | " | 10 |
| treated | " | " | " | " | " | 1400 | " | 0 |
| No. 3, | | | | | | | | |
| untreated | " | " | " | " | " | 1920 | " | 12 |
| treated | " | " | " | " | " | 1410 | " | 0 |

It can be clearly seen, that the defect levels samples having ratios of eq.$M^{2+}$:$M^{+}$:$H^{+}$, namely TMFI's within the claimed range, are much less than those samples from untreated starch.

**Claims**

1. A thermoplastic melt made from starch containing bound phosphate groups and having a water content of 5 to 30% by weight calculated to the starch/water composition characterized in that within said melt the relative concentrations of the cations and the protons bound to said phosphate groups are within the limits

eq.$M^{2+}$ : $M^{+}$ : $H^{+1}$ = (0.0-1.9) (0.0:0.9) : 0.0-1.4)

wherein

$M^{2+}$ is a divalent cation, preferably $Ca^{2+}$ or $Mg^{2+}$ or a mixture of these cations;

$M^{+}$ is a monovalent cation, preferably $Na^{+}$ or $K^{+}$ or a mixture of these cations;

$H^{+}$ is the proton and

the sum of the numbers of said equivalents eq.$M^{2+}$, $M^{+}$ and $H^{+}$ per mole of phosphate groups equals 2.

2. A thermoplastic melt according to claim 1, wherein eq.$M^{2+}$ : $M^{+}$ : $H^{+}$ = (0.8 - 1.2) : (0.2 - 0.6) : (0.4 - 0.8); preferably eq.$M^{2+}$ : $M^{+}$ : $H^{+}$ = (0.85 - 1.15) : (0.3 - 0.5) : (0.5 - 0.7); most preferably wherein eq.$M^{2+}$ : $M^{+}$, $H^{+}$ = 1 : 0.4 : 0.6 and wherein each time the sum of the numbers of said equivalents $M^{2+}$ : $M^{+}$ and $H^{+}$ per mole of phosphate groups equals 2.

3. A thermoplastic melt according to claim 1 or 2, wherein the Thermoplastic Melt Formation Index (TMFI) is within the range of 171 to 202 and preferably within the range of 180 to 190, wherein the TMFI is expressed as being

TMFI = $a_0$ + $a_1$ + $a_2$

wherein

$a_0$ = 278.34;

$a_1$ = -45.24

$a_2$ = -77.60;

and wherein the TMFI is preferably

TMFI = $a_0$ + $a_1$ (1.935 - 0.005) + $a_2$ (0.01 - 1.26).

4. A thermoplastic melt according to anyone of the claims 1 to 3, wherein the starch used to produce said melt includes chemically essentially non-modified starch composed mainly of amylose and/or amylopectin and which contain bound phosphate groups, physically modified starch, starch with a modified acid value (pH) preferably such potato starch.

5. A thermoplastic melt according to anyone of the claims 1 to 4, wherein said starch melt was heated for destructurization in a closed volume for a time long enough to effect destructurization to a temperature within the range of about 105°C to 190°C, preferably within the range of 130°C to 190°C.

6. A thermoplastic melt according to anyone of the claims 1 to 5, wherein for destructurization pressure was applied in the range of from zero to 150 x $10^5$ N/$m^2$, preferably from zero to 75 x $10^5$ N/$m^2$ and particularly from zero to 50 x $10^5$ N/$m^2$.

7. A thermoplastic melt according to anyone of the claims 1 to 6, wherein the starch has a water content in the range of about 5 - 25% and preferably of about 10 to 20% by weight of the starch/water component, preferably 12% to 19% and especially 14% to 18% by weight, calculated to the weight of the starch/water component.

8. A thermoplastic melt according to anyone of the claims 1 to 7, wherein the starch melt contains essentially hydrophilic polymers which are water-soluble or water-swellable, essentially water-insoluble thermoplastic polymers, fillers, lubricants, plasticizers and/or coloring agents.

9. A thermoplastic melt according to anyone of the claims 1 to 8, characterized in that there is added at least one essentially hydrophilic polymer or a mixture of such polymers within the range of up to 50%, preferably within the range of 3% to 20%, based on the weight of all components.

10. A thermoplastic melt according to anyone of the claims 1 to 9, characterized in that there is added at least one essentially water-insoluble thermoplastic polymer and that the ratio of the destructurized starch to the essentially water-insoluble thermoplastic polymer is 0.1:99.9 to 99.9:0.1, preferably wherein the destructurized starch is present in an amount of at least 50% and more preferably in the range of 70 to 99% by weight of the entire composition.

11. A thermoplastic melt according to anyone of the claims 1 to 10, wherein the ratio of the essentially water-insoluble polymer to the starch/water component is 0.5 - 5% to 99.5 - 95% by weight and preferably from 0.5% - 2% to 99.5% - 98% by weight.

12. A thermoplastic melt according to anyone of the claims 1 to 11, characterized in that there is added at least one organic filler or a mixture of such fillers in a concentration of about 0.02 to 3%, preferably 0.02 to 1% by weight of all components.

13. A thermoplastic melt according to anyone of the claims 1 to 12, wherein there is added a plasticizer within the range of about 0.5 to 15%, preferably 0.5 to 5% by weight of all components.

14. A thermoplastic melt according to anyone of the claims 1 to 13, wherein a coloring agent is added in a concentration of about 0.001 to 10%, preferably 0.5 to 3% by weight of all components.

15. A thermoplastic melt according to anyone of the claims 1 to 14, wherein a plasticizer is added and the sum of the plasticizer and water contents does not exceed 25%, and preferably does not exceed 20% by weight of all components.

16. A thermoplastic melt according to anyone of the claims 1 to 15, wherein the blended starch contains at least one active ingredient selected from pharmaceuticals and/or agriculturally active compounds.

17. The solidified destructurized blended starch obtained by cooling the melt as claimed according to anyone of the claims 1 to 16.

18. The use of a thermoplastic melt as claimed in anyone of the claims 1 to 17 as carrier material for active ingredients, preferably as carrier materials for pharmaceuticals, and/or agriculturally active substances.

19. A process for obtaining starch containing phosphate groups and having a relative concentration of the cations and the protons bound to said phosphate groups of

eq.$M^{2+}$ : $M^{+}$ : $H^{+1}$ = (0.0-1.9) (0.0:0.9) : (0.0-1.4)

wherein

$M^{2+}$ is a divalent cation, preferably $Ca^{2+}$ or $Mg^{2+}$ or a mixture of these cations;

$M^{+}$ is a monovalent cation, preferably $Na^{+}$ or $K^{+}$ or a mixture of these cations;

$H^{+}$ is the proton and the sum of the numbers of said equivalents eq.$M^{2+}$, $M^{+}$ and $H^{+}$ per mole of phosphate groups equals 2, comprising the steps of

A) providing a starch material containing bound phosphate groups

B) dispersing said starch in an aqueous solution containing divalent cations $M^{2+}$, monovalent cations $M^{+}$ in a ratio of eq.$M^{2+}$:$M^{+}$ = 1:(2-15), preferably 1:(2-10), and a pH of 4-7.5 for a time long enough to bring the aqueous solution and the contacted starch to equilibrium

C) separating the starch from the aqueous medium and

D) conditioning the obtained starch material to a water content of 5-30% by weight calculated on the basis of starch and water.

20. The starch obtained according to the process claimed in claim 19.

21. A process for obtaining a starch melt as claimed in anyone of the claims 1 to 16, comprising step E):

E) heating the starch/water composition according to claim 19 as obtained under step D) optionally after having added further additives at an elevated pressure to a temperature sufficient and for a time long enough to essentially destructurize the starch while maintaining said water content until a melt of destructurized starch is formed.

22. A process for obtaining a solid article from the melt as claimed in claim 21, comprising the step F):

F) cooling said melt (as obtained under step E)) optionally after forming the melt into a shaped article, to form a solid shaped article.

23. The solid articles as obtained according to claim 22.

24. A granulate according to claim 23.

25. The process of shaping a thermoplastic melt as obtained according to anyone of the claims 1 to 16, under controlled water content and pressure conditions wherein said shaping process is at least one member selected from the class consisting of injection molding, blow molding, extrusion and coextrusion, compression molding or vacuum forming.

26. Shaped articles produced from a composition as claimed in anyone of the claims 1 to 16.

27. The articles of claim 26, wherein said articles have been shaped as bottles, sheets, films, packaging materials, pipes, rods, laminates, sacks, bags or pharmaceutical capsules, granules or powders.